# FASCICULE DE BREVET EUROPEEN

(11) **EP 2 922 730 B1**
(45) Date de publication et mention de la délivrance du brevet: **01.02.2017**
(21) Numéro de dépôt: 13791841.3
(22) Date de dépôt: 18.11.2013
(51) Int. Cl.: B60R 19/52

(54) **AGENCEMENT D'UNE FAÇADE AVANT D'UN VÉHICULE AUTOMOBILE POURVU D'UNE GRILLE D'ENTRÉE D'AIR FIXÉE AU BOUCLIER AVANT PAR UN VERROUILLAGE EXTÉRIEUR**
ANORDNUNG EINES FRONTS EINES KRAFTFAHRZEUGES MIT EINEM AN DEM FRONTSHILD VON EINER EXTERNEN SPERRE BEFESTIGTEN GRILL
ARRANGEMENT OF A FRONT FACE OF A MOTOR VEHICLE WITH A GRILLE FIXED TO THE FRONT SHIELD BY AN EXTERNAL LOCK

(30) Priorité: 21.11.2012 FR 1261061
(43) Date de publication de la demande: 30.09.2015
(73) Titulaire: Renault S.A.S., 92100 Boulogne-Billancourt (FR)
(72) Inventeur: LINGET, Jarnot, F-78690 Les Essarts Le Roi (FR)
(86) Numéro de dépôt international: PCT/EP2013/074101
(87) Numéro de publication internationale: WO 2014/079818

(56) Documents cités:
- EP-A1- 1 387 091
- DE-A1-102007 047 270
- FR-A1- 2 856 968
- FR-A1- 2 922 171

## Description

### Domaine de l'invention :

La présente invention concerne un agencement d'une façade avant d'un véhicule automobile. L'invention se rapporte plus particulièrement à un tel agencement comprenant un bouclier avant et une grille d'entrée d'air clippée en certaines zones au bouclier. La publication FR 2 856 968 A1 divulgue un agencement d'après le préamble de la revendication 1.

### Etat de la technique :

On connaît classiquement des véhicules automobiles ayant un agencement classique de façade avant dans lequel un bouclier avant et une grille d'entrée d'air pour l'alimentation en air d'un- ensemble de refroidissement du groupe motopropulseur du véhicule sont reliés l'un à l'autre en diverses zones. Une grille inférieure est par exemple disposée dans une ouverture inférieure du bouclier, typiquement située en dessous de la zone d'accueil d'une plaque minéralogique, ménagée au devant du bouclier. La grille inférieure est classiquement clippée au moins dans ses parties latérales au bouclier. De façon connue, la grille est rapportée contre la peau du bouclier par son côté arrière ou intérieure. Des orifices de fixation sont prévus en périphérie de la grille et sont traversés par des pattes de fixation correspondantes conformées sur le bord de l'ouverture inférieure du bouclier, lorsque la grille est mise en place sur l'ouverture et appliquée contre le bouclier.

Ce mode de fixation est peu robuste. On observe que des chocs très légers engendrent très facilement un déclippage des parties latérales de la grille. Ceci compromet non seulement le maintien mécanique de la grille mais altère l'aspect extérieur du véhicule et traduit une mauvaise qualité de fabrication.

### But de l'invention :

L'invention a pour but de pallier les inconvénients précédents en proposant un agencement de façade avant de véhicule automobile qui soit robuste et maintienne efficacement la grille d'entrée d'air le bouclier avant.

### Objet de l'invention :

A cet effet, l'invention a pour objet un agencement de façade avant d'un véhicule automobile, comprenant un bouclier avant, une grille d'entrée d'air pour l'alimentation en air d'un ensemble de refroidissement du groupe motopropulseur du véhicule, la grille étant pourvue dans chacune de ses parties latérales d'au moins un orifice de clippage dans lequel est introduite une patte de clippage venue de matière avec le bouclier, caractérisé en ce qu'il comprend un doigt de blocage interposé entre la patte et un bord de l'orifice de façon à empêcher l'extraction de la patte relativement à l'orifice, la patte étant pourvue d'un relief à son extrémité coopérant en butée avec le bord de l'orifice à l'opposé du doigt de blocage.
Cet agencement simple et judicieux permet d'emprisonner l'extrémité de la patte de clippage dans son logement par l'intermédiaire du doigt de blocage qui agit à la façon d'un verrou. Le clippage est de ce fait très renforcé.

Selon d'autres caractéristiques avantageuses de l'invention :
- le relief de la patte de clippage est dirigé vers le haut et coopère en butée avec une zone supérieure du bord de l'orifice,
- le bouclier comporte dans chacune de ses parties latérales, deux pattes de clippage dont une patte inférieure est introduite et est retenue dans l'orifice de clippage, et une patte supérieure coopère avec un bord correspondant de la grille, ces deux pattes étant pourvues à leur extrémité de reliefs respectifs en vis-à-vis,
- le doigt de blocage est conformé sur une pièce de finition ou de protection extérieure, en particulier sur un enjoliveur de projecteur antibrouillard,
- les pattes de clippage et le doigt de blocage s'étendent suivant la direction sensiblement longitudinale du véhicule, vers l'arrière de celui-ci,
- l'orifice de blocage présente une hauteur supérieure à la dimension verticale de la patte de blocage, mesurée au droit du relief,
- les orifices de clippage sont situés dans une zone inférieure de la grille,
- les orifices de clippage sont situés dans des branches latérales inférieures de la grille.
L'invention a également pour objet un véhicule automobile comprenant un agencement ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente un agencement de façade avant d'un véhicule automobile selon l'invention, dans une vue partielle et suivant.la direction longitudinale du véhicule, depuis le côté intérieur gauche du bouclier,
- la figure 2 représente l'agencement de la figure 1, selon un angle de vue à environ 45° par rapport à la direction longitudinale du véhicule,
- la figure 3 représente l'agencement de la figure 1 en section suivant la ligne de coupe A-A de la figure 1, et
- la figure 4 représente l'agencement de la figure 1 en coupe selon cette même ligne de coupe A-A.

Dans le présent texte, les directions et orientations sont indiquées en référence au repère classiquement utilisé dans la conception d'un véhicule, dans lequel X désigne la direction longitudinale avant-arrière du véhicule, dirigé vers l'arrière, Y la direction transversale du véhicule, dirigé vers la droite, et Z la direction verticale.

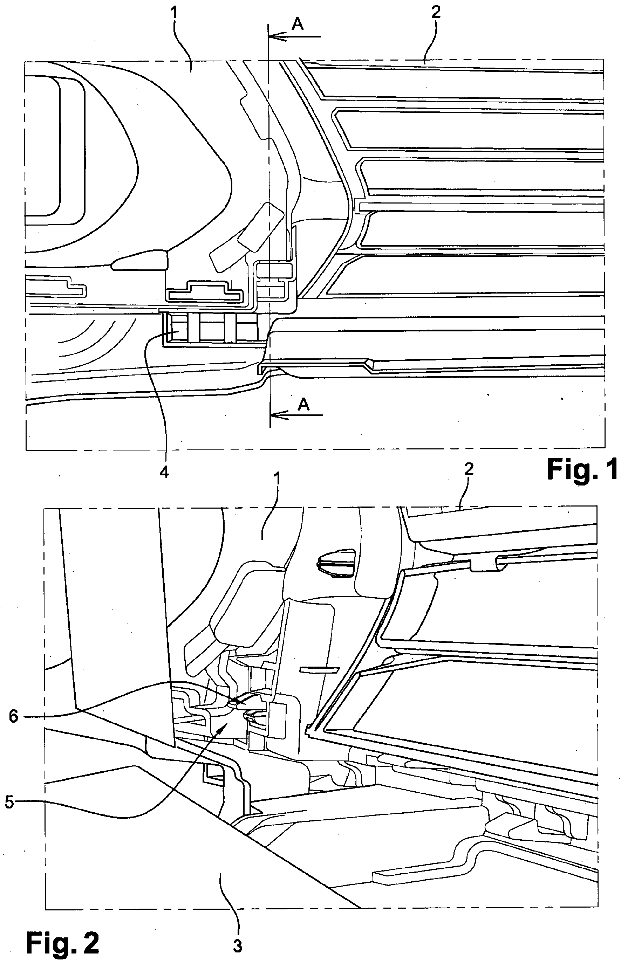

On a représenté aux figures 1 à 4 un agencement d'une façade avant d'un véhicule automobile suivant l'invention. Cet agencement comprend un bouclier avant 1 s'étendant sur toute la largeur du véhicule. Le bouclier 1 comporte typiquement une ou deux grilles d'entrée d'air placée(s) dans des ouvertures de formes conjuguées, ménagées dans une région centrale du bouclier 1. Ces grilles d'entrée d'air sont destinées à capter de l'air destiné à un ensemble de refroidissement d'un groupe motopropulseur du véhicule (non représenté), situé derrière le bouclier et en avant du moteur et constitué d'au moins un échangeur thermique. Dans l'exemple illustré la grille d'entrée d'air est une grille inférieure 2, c'est-à-dire située en dessous d'une zone d'accueil d'une plaque minéralogique du véhicule, située sur la face avant du bouclier 1. Cette grille inférieure 2 est située au plus près d'un déflecteur 3 (figure 2) sous caisse également nommé « convergent » inférieur placé de façon sensiblement horizontale sous le bouclier 1 pour éviter les phénomènes de recirculation d'air sous le compartiment moteur. La grille 2 est positionnée contre le côté intérieur ou arrière du bouclier 1.

La grille 2 est fixée au bord de l'ouverture correspondante du bouclier 1 en différentes zones. Dans l'exemple illustré, la grille 2 comporte des branches 4 latérales inférieures s'étendant suivant la direction transversale Y vers les côtés latéraux du véhicule. Cette zone est particulièrement exposée aux contraintes agissant tant sur le bouclier que sur la grille, lors d'un choc, de sorte qu'un effort agissant d'un côté du véhicule est susceptible de rompre localement la fixation entre le bouclier et la grille mais également de générer des efforts conséquents du côté opposé du bouclier par un effet de bras de levier, ce qui peut induire également une rupture du côté opposé. Les dispersions géométriques sur ces pièces de dimensions importantes et en plastique peuvent également faciliter la rupture des fixations dans ces parties latérales.

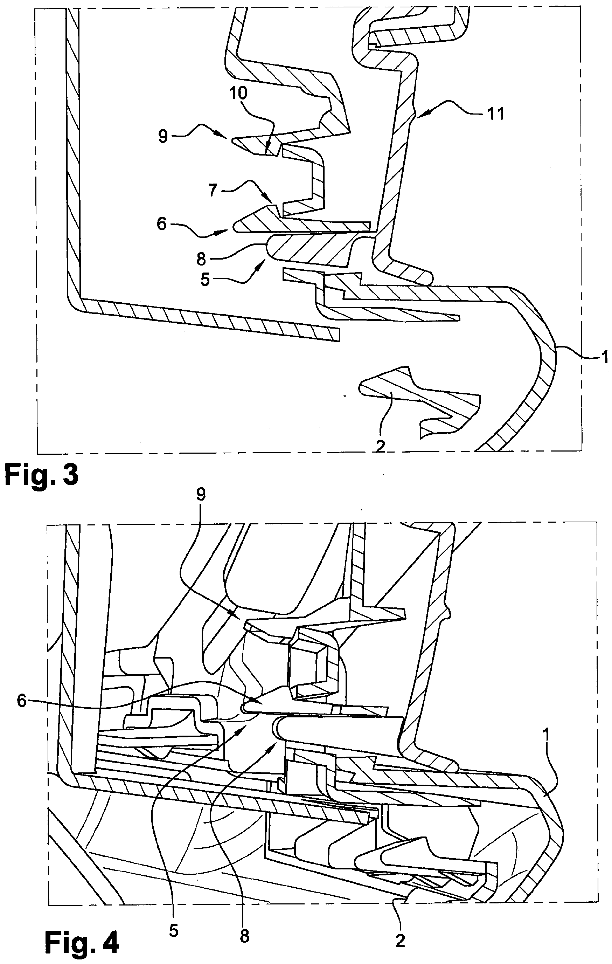

Comme représenté à la figure 3, la grille 2 comprend dans chaque branche 4 au moins un orifice de clippage 5 (figure 3) dans lequel est introduite une patte de clippage 6 venue de matière avec le bouclier 1. Cette patte de clippage 6 s'étend suivant la direction longitudinale du véhicule. La patte de clippage 6 comporte un relief 7 ou bossage coopérant en butée avec le bord de l'orifice 5. Dans cet exemple, le relief 7 est tourné vers le haut et coopère avec une zone supérieure de l'orifice 5. On note que la hauteur de l'orifice 5 est supérieure à la dimension verticale de la patte de clippage 6, mesurée au droit du relief 7. Typiquement la hauteur de l'orifice 5 est au moins deux fois supérieure à cette dimension verticale de la patte 6. Cette hauteur de l'orifice 5 permet à la patte 6 de se déformer élastiquement en s'avançant vers le centre de l'orifice, lorsque le relief 7 est repoussé par le bord de l'orifice 5. Lorsque la patte de clippage 6 est introduite jusqu'à sa position définitive, le relief 7 se retrouve derrière le bord de l'orifice 5 et est libéré de sa contrainte, la patte de clippage 6 pouvant alors élastiquement reprendre sa position initiale. Un espace est donc ménagé entre la patte de clippage 6 et le bord de l'orifice 5, du côté opposé au relief 7.

L'agencement de l'invention comprend avantageusement un doigt de blocage 8 interposé entre la patte 6 et le bord de l'orifice 5, à l'opposé du relief 7. Le doigt 8 forme un verrou empêchant que la patte 6 s'écarte de sa position initiale et dévie vers le centre de l'orifice 5. Le doigt 8 empêche de ce fait l'extraction de la patte de clippage 6.

Dans l'exemple illustré, le bouclier 1 comporte dans chacune de ses parties latérales, deux pattes de clippage 6, 9 superposées. La patte de clippage inférieure 6 est la patte décrite ci-dessus qui coopère avec l'orifice 5. Une patte supérieure 9 coopère avec un bord correspondant de la grille 2. Les deux pattes 6, 9 sont pourvues à leur extrémité de reliefs respectifs 7, 10 en vis-à-vis. Les reliefs 7, 10 aux extrémités des pattes 6, 9 ont des zones frontales coniques ou en pente pour faciliter leur mise en position (par glissement) derrière les bords correspondant de la grille 1.

Le doigt de blocage 8 est conformé sur une pièce 11 de finition ou de protection extérieure. Dans l'exemple illustré, ce doigt de blocage 8 est typiquement conformé sur un enjoliveur de projecteur antibrouillard, qui est une pièce située du côté extérieur du bouclier 1 positionnée à proximité ou autour du projecteur antibrouillard (non représenté). Cette pièce est disposée par la face avant du bouclier 1. Le doigt 8 s'étend sensiblement suivant la direction longitudinale X du véhicule et pénètre au moins en partie dans l'espace laissé libre entre la patte de clippage 6 et le bord de l'orifice 5. Le doigt 8 est conformé et dimensionné pour combler globalement cet espace. Il épouse d'un côté la patte de clippage 6 et prendre appui de l'autre sur le bord de l'orifice 5. Le doigt 8 comprend également une base de liaison line avec le corps de la pièce 11 de finition ou de protection. Cette base assure une mobilité au doigt 8 qui trouve ainsi facilement son chemin, en dépit des dispersions géométriques, en s'insérant entre la patte de clippage 6 et le bord de l'orifice 5.

L'embout du doigt 8 a une forme arrondie ou conique facilitant son insertion.

Le démontage de la grille 2 s'effectue en démontant préalablement les pièces de finition ou de protection extérieures, à savoir ici les enjoliveurs de projecteurs antibrouillard.

On suppose que l'agencement de l'invention est symétrique par rapport à un plan médian vertical longitudinal du véhicule.

Bien entendu, l'invention n'est pas limitée aux modes ou variantes de réalisation décrits précédemment et comprends tous les équivalents techniques de ces moyens.

## Revendications

1. Agencement d'une façade avant d'un véhicule automobile, comprenant un bouclier avant (1), une grille (2) d'entrée d'air pour l'alimentation en air d'un ensemble de refroidissement du groupe motopropulseur du véhicule, la grille (2) étant pourvue dans chacune de ses parties latérales d'au moins un orifice (5) de clippage dans lequel est introduite une patte de clippage (6) venue de matière avec le bouclier (1), **caractérisé en ce qu'**il comprend un doigt de blocage (8) interposé entre la patte (6) et un bord de l'orifice (5) de façon à empêcher l'extraction de la patte (6) relativement à l'orifice (5), la patte (6) étant pourvue d'un relief (7) à son extrémité coopérant en butée avec le bord de l'orifice (5) à l'opposé du doigt de blocage (8).

2. Agencement selon la revendication 1, **caractérisé en ce que** le relief (7) de la patte de clippage (6) est dirigé vers le haut et coopère en butée avec une zone supérieure du bord de l'orifice (5).

3. Agencement selon la revendication 1 ou 2, **caractérisé en ce que** le bouclier (1) comporte dans chacune de ses parties latérales, deux pattes de clippage (6, 9) dont une patte inférieure (6) est introduite et est retenue dans l'orifice (5) de clippage, et une patte supérieure (9) coopère avec un bord correspondant de la grille (2), ces deux pattes (6, 9) étant pourvues à leur extrémité de reliefs respectifs (7,10) en vis-à-vis.

4. Agencement selon l'une quelconque des revendications précédentes, **caractérisé en ce que** le doigt de blocage (8) est conformé sur une pièce (11) de finition ou de protection extérieure, en particulier sur un enjoliveur de projecteur antibrouillard.

5. Agencement selon la revendication 3 ou 4, **caractérisé en ce que** les pattes de clippage (6, 9) et le doigt de blocage (8) s'étendent suivant la direction sensiblement longitudinale (X) du véhicule, vers l'arrière de celui-ci.

6. Agencement selon l'une quelconque des revendications 3 à 5, **caractérisé en ce que** l'orifice (5) de blocage présente une hauteur supérieure à la dimension verticale de la patte de blocage (6), mesurée au droit du relief (7).

7. Agencement selon l'une quelconque des revendications précédentes, **caractérisé en ce que** les orifices (5) de clippage sont situés dans une zone inférieure de la grille (2).

8. Agencement selon l'une quelconque des revendications précédentes, **caractérisé en ce que** les orifices (5) de clippage sont situés dans des branches (4) latérales inférieures de la grille (2).

9. Véhicule automobile **caractérisé en ce qu'**il comprend un agencement selon l'une quelconque des revendications précédentes.

## Patentansprüche

1. Gestaltung einer Frontseite eines Kraftfahrzeugs, die einen vorderen Stoßfänger (1), ein Lufteintrittsgitter (2) zur Luftversorgung einer Kühleinheit des Antriebsstrangs des Fahrzeugs enthält, wobei das Gitter (2) in jedem seiner Seitenteile mit mindestens einer Einklinköffnung (5) versehen ist, in die eine Einklinklasche (6) eingeführt wird, die aus dem gleichen Material wie der Stoßfänger (1) besteht, **dadurch gekennzeichnet, dass** sie einen Blockierfinger (8) enthält, der zwischen die Lasche (6) und einen Rand der Öffnung (5) eingefügt wird, um das Herausziehen der Lasche (6) bezüglich der Öffnung (5) zu verhindern, wobei die Lasche (6) mit einem Relief (7) an ihrem Ende versehen ist, das in Anschlag mit dem Rand der Öffnung (5) entgegengesetzt zum Blockierfinger (8) zusammenwirkt.

2. Gestaltung nach Anspruch 1, **dadurch gekennzeichnet, dass** das Relief (7) der Einklinklasche (6) nach oben gerichtet ist und in Anschlag mit einem oberen Bereich des Rands der Öffnung (5) zusammenwirkt.

3. Gestaltung nach Anspruch 1 oder 2, **dadurch gekennzeichnet, dass** der Stoßfänger (1) in jedem seiner Seitenteile zwei Einklinklaschen (6, 9) aufweist, von denen eine untere Lasche (6) in die Einklinköffnung (5) eingeführt und dort gehalten wird, und eine obere Lasche (9) mit einem entsprechenden Rand des Gitters (2) zusammenwirkt, wobei diese zwei Laschen (6, 9) an ihrem Ende je mit einander gegenüberliegenden Reliefs (7, 10) versehen sind.

4. Gestaltung nach einem der vorhergehenden Ansprüche, **dadurch gekennzeichnet, dass** der Blockierfinger (8) auf einem äußeren End- oder Schutzbauteil (11) ausgebildet ist, insbesondere auf einer Zierkappe eines Nebelscheinwerfers.

5. Gestaltung nach Anspruch 3 oder 4, **dadurch gekennzeichnet, dass** die Einklinklaschen (6, 9) und der Blockierfinger (8) sich im Wesentlichen in der Längsrichtung (X) des Fahrzeugs zu dessen Rückseite erstrecken.

6. Gestaltung nach einem der Ansprüche 3 bis 5, **dadurch gekennzeichnet, dass** die Blockieröffnung (5) eine größere Höhe als die senkrechte Abmessung der Blockierlasche (6) aufweist, gemessen lotrecht zum Relief (7).

7. Gestaltung nach einem der vorhergehenden Ansprüche, **dadurch gekennzeichnet, dass** die Einklinköffnungen (5) sich in einem unteren Bereich des Gitters (2) befinden.

8. Gestaltung nach einem der vorhergehenden Ansprüche, **dadurch gekennzeichnet, dass** die Einklinköffnungen (5) sich in unteren Seitenzweigen (4) des Gitters (2) befinden.

9. Kraftfahrzeug, **dadurch gekennzeichnet, dass** es eine Gestaltung nach einem der vorhergehenden Ansprüche enthält.

## Claims

1. Arrangement for the front end of a motor vehicle, including a front bumper (1) and an air intake grill (2) for supplying air to a cooling unit of the power train of the vehicle, the grill (2) being provided with at least one clip-connection orifice (5) in each of the side portions thereof, into which a clip-connection tab (6) that is integral with the bumper (1) is inserted, **characterized in that** it includes a locking finger (8) inserted between the tab (6) and an edge of the orifice (5) such as to prevent the tab (6) from being removed from the orifice (5), the tab (6) being provided with a raised portion (7) at the end thereof which abuts against the edge of the orifice (5) opposite the locking finger (8).

2. Arrangement according to Claim 1, **characterized in that** the raised portion (7) of the clip-connection tab (6) is oriented upwards and abuts against an upper zone of the edge of the orifice (5).

3. Arrangement according to Claim 1 or 2, **characterized in that** the bumper (1) has, on each of the lateral portions of same, two clip-connection tabs (6, 9), of which a lower tab (6) is inserted and held in the clip-connection orifice (5), and an upper tab (9) cooperates with a corresponding edge of the grill (2), the ends of these two tabs (6, 9) having respective opposing raised portions (7, 10).

4. Arrangement according to any one of the preceding claims, **characterized in that** the locking finger (8) is formed on a external protection or finishing part (11), in particular on a fog light trim.

5. Arrangement according to Claim 3 or 4, **characterized in that** the clip-connection tabs (6, 9) and the locking finger (8) extend in the substantially longitudinal direction (X) of the vehicle, towards the rear of same.

6. Arrangement according to any one of Claims 3 to 5, **characterized in that** the locking orifice (5) is taller than the vertical dimension of the locking tab (6), measured level with the raised portion (7).

7. Arrangement according to any one of the preceding claims, **characterized in that** the clip-connection orifices (5) are located in a lower zone of the grill (2).

8. Arrangement according to any one of the preceding claims, **characterized in that** the clip-connection orifices (5) are located in the lower lateral branches (4) of the grill (2).

9. Motor vehicle **characterized in that** it includes an arrangement according to any one of the preceding claims.
